# FASCICULE DE BREVET EUROPEEN

(11) **EP 0 451 035 B1**
(45) Date de publication et mention de la délivrance du brevet: **03.11.1993**
(21) Numéro de dépôt: 91400867.7
(22) Date de dépôt: 29.03.1991
(51) Int. Cl.: B60N 2/20, B60R 22/26

(54) **Perfectionnements aux sièges de véhicules à ceinture embarquée**
Fahrzeugsitze mit daran befestigtem Gurt
Vehicle seats with integral seat belt

(30) Priorité: 04.04.1990 FR 9004326
(43) Date de publication de la demande: 09.10.1991
(73) Titulaire: BERTRAND FAURE AUTOMOBILE, F-78391 Bois d'Arcy Cédex (FR)
(72) Inventeur: Boisset, Bernard, F-91150 Etampes (FR)
(74) Mandataire: Behaghel, Pierre

(56) Documents cités:
- DE-A- 2 324 168
- DE-A- 2 906 273
- DE-U- 7 923 386

## Description

L'invention est relative aux sièges de véhicules à ceinture embarquée, c'est-à-dire équipés d'une ceinture de sécurité et portant eux-mêmes les points d'ancrage de cette ceinture, généralement au nombre de trois, l'un de ces points étant disposé au sommet du dossier.

Elle vise plus particulièrement, parmi ces sièges, ceux dont le dossier est réglable en inclinaison et de préférence en outre basculable vers l'avant autour d'un axe horizontal transversal inférieur, comme il est requis pour les sièges avant de certains coupés ou cabriolets afin de rendre accessibles les places arrières de ces véhicules.

La localisation de l'ancrage de ceinture en un point haut P du dossier plutôt que sur la caisse du véhicule est rendue nécessaire lorsque cette caisse ne présente pas de point haut approprié (cas des coupés et cabriolets).

En outre, dans tous les cas, une telle localisation présente l'important avantage de l'indépendance entre, d'une part, le réglage de la ceinture et, d'autre part, la position du siège en avance ou recul et l'inclinaison de son dossier.

Mais elle pose le problème de la résistance mécanique de ce dossier aux efforts exercés sur ledit point P.

En particulier, lors d'une décélération brusque du véhicule, l'effort F exercé horizontalement vers l'avant sur le point P peut être très élevé et les mécanismes d'articulation réglable et éventuellement de basculement actuellement proposés pour les sièges considérés ne sont pas assez résistants pour encaisser un tel effort.

L'invention a pour but, surtout, de remédier à cet inconvénient en proposant pour les sièges du genre considéré et leurs mécanismes d'articulation une construction suffisamment robuste pour encaisser les efforts ci-dessus.

A cet effet, les sièges de véhicules du genre en question selon l'invention comprennent encore un dossier monté pivotant autour d'un axe horizontal transversal inférieur A lié à l'embase du siège et ils sont essentiellement caractérisés en ce que l'armature de ce dossier comprend une poutre latérale très résistante à la flexion et portant le point d'ancrage supérieur P de la ceinture, une traverse inférieure fixée sur la base de la poutre et suffisamment résistante pour interdire l'inclinaison transversale de cette poutre et une pièce en L fixée sur la poutre et sur la traverse de façon à former avec elles un cadre, et en ce qu'il est prévu en outre une jambe de force résistante au flambage dont les extrémités sont montées de façon pivotante, respectivement, autour d'un axe horizontal transversal B lié à l'avant de l'embase du siège et autour d'un axe horizontal transversal C faisant partie de la poutre et disposé à une distance, de l'axe A, qui est inférieure au 1/6 de la distance séparant cet axe A du point d'ancrage supérieur P de la ceinture, et des moyens agissant sur la jambe de force pour régler la position de l'axe C autour de l'axe A.

Dans des modes de réalisation avantageux, on a recours en outre à l'une et/ou à l'autre des dispositions suivantes :
- la poutre est d'un type en caisson prismatique creux,
- la traverse comprend essentiellement une tôle de forme trapézoïdale dont la grande base est soudée contre la poutre,
- les moyens pour régler la position de l'axe C sont agencés de façon à modifier la position longitudinale de l'axe B par rapport à l'embase,
- les moyens de réglage selon l'alinéa précédent fonctionnent par vissage d'une tige filetée liée angulairement à un organe de commande et montée sur l'embase du siège dans un écrou solidarisé avec l'extrémité inférieure de la jambe de force,
- dans un siège selon l'alinéa précédent, des moyens commandables à partir d'une manette montée sur le dossier sont prévus pour supprimer momentanément la solidarisation entre la tige filetée et la jambe de force pour permettre les basculements du dossier,
- les moyens pour régler la position de l'axe C sont agencés de façon à modifier la distance entre les deux axes B et C,
- dans un siège selon l'alinéa précédent, la jambe de force présente une construction téléscopique, les deux éléments montés coulissants l'un dans l'autre constituant cette jambe sont normalement solidarisés mutuellement et des moyens commandables à partir d'une manette montée sur le dossier sont prévus pour supprimer momentanément cette solidarisation.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent respectivement de côté et en perspective de trois quart avant, une ossature de siège de véhicule à ceinture embarquée établie conformément à l'invention, l'assise et le coussin du dessin n'étant représentés que sur la figure 2.

Les figures 3 et 4 sont des schémas montrant les différentes positions occupées par le dossier et la jambe de force qui lui est associée respectivement pour trois positions de réglage d'inclinaison et pour deux positions extrêmes de basculement.

Enfin, les figures 5 et 6 montrent plus en détail un mode de réalisation possible pour un mécanisme de réglage de l'inclinaison du dossier et de libération du basculement de ce dernier.

D'une façon générale, le siège de véhicule considéré comprend, dans chaque cas :
- une embase 1 montée de façon coulissante sur deux glissières horizontales longitudinales 2 fixées sur le châssis ou plancher du véhicule, des moyens (non représentés) étant prévus pour régler à volonté la position de l'embase de long de ces glissières et pour la verrouiller en chacune de ses positions de réglage,
- une assise 3 montée sur l'embase,
- un dossier 4 monté de façon pivotante autour d'un axe horizontal transversal inférieur A lié à l'embase,
- et une ceinture de sécurité 5.

Cette ceinture 5 est "embarquée", c'est-à-dire totalement montée sur le siège, avec ses trois points d'ancrage disposés sur ce siège, savoir deux points bas S et T disposés sur les deux côtés de l'embase et un point haut P disposé au sommet du dossier.

En réalité le point P ne correspond pas directement dans la pratique à l'ancrage proprement dit, mais à l'entrée de la ceinture dans un couloir 6 conduisant à la bobine d'un mécanisme d'enroulement.

La localisation des points d'ancrage bas S et T sur l'embase 1 implique une bonne résistance à l'arrachement vertical de cette embase par rapport aux glissières 2.

Ce problème est résolu par des moyens appropriés qui ne font pas partie de la présente invention.

Cette invention concerne essentiellement les conséquences à tirer de la localisation du point d'ancrage haut P au sommet du dossier 4.

En effet, il résulte de cette localisation que, lors des décélérations brusques du véhicule, ce point P est soumis, de la part du poids de l'usager attaché par la ceinture sur le siège, à une force F très élevée orientée vers l'avant.

Cette force F peut atteindre et même dépasser une tonne.

Les constructions habituellement proposées pour les dossiers et leurs mécanismes d'articulation ne sont pas assez robustes pour encaisser de telles forces.

La construction très robuste ici proposée est compatible avec ces forces.

Cette construction concerne, d'une part, la constitution même de l'ossature du dossier et, d'autre part, le mécanisme de réglage de l'inclinaison de celui-ci.

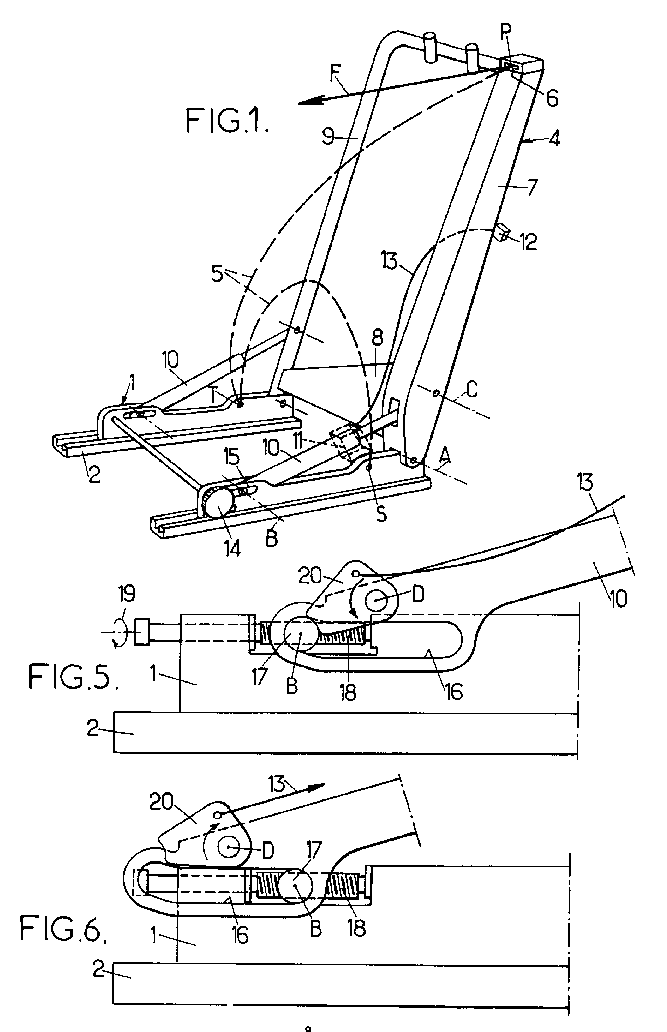

Pour ce qui est de l'ossature du dossier 4, présentant la forme générale d'un cadre, on lui fait comprendre :
- une poutre latérale 7 présentant une forte résistance à la flexion,
- une traverse inférieure 8 (figure 1) présentant une forte résistance au flambage et fixée sur la base de la poutre 7,
- et une pièce rigide 9 en L fixée sur la poutre et sur la traverse de façon à compléter avec elles ledit cadre, la base de cette pièce 9 étant montée pivotante, comme celle de la poutre 7, autour de l'axe A.

La poutre 7 est avantageusement constituée à la façon d'un caisson prismatique creux de section rectangulaire et d'épaisseur légèrement croissante vers le bas.

La traverse 8 est avantageusement constituée par au moins une tôle de forme générale trapézoïdale dont la grande base est soudée contre la base de la poutre 7.

Le cadre ainsi formé par l'ensemble des éléments 7, 8 et 9 présente une grande rigidité, et en particulier une forte résistance aux sollicitations à la flexion et à l'écrasement transversal susceptibles d'être engendrées par application sur le point P des forces F définies ci-dessus, lesquelles ne sont pas contenues dans des plans longitudinaux, mais légèrement inclinées sur de tels plans.

On prévoit en outre :
- pour maintenir le dossier 4 en chacune de ses inclinaisons préréglées, deux jambes de force 10 parallèles présentant une grande résistance au flambage et montées de façon pivotante autour d'un axe horizontal transversal B lié à l'avant de l'embase 1 et autour d'un axe horizontal transversal C solidaire du dossier 4,
- et, pour rendre possibles les réglages angulaires et les basculements du dossier 4 autour de son axe inférieur A, des moyens pour régler à volonté la distance entre les axes B et C ou la position relative de l'axe B par rapport à l'embase.

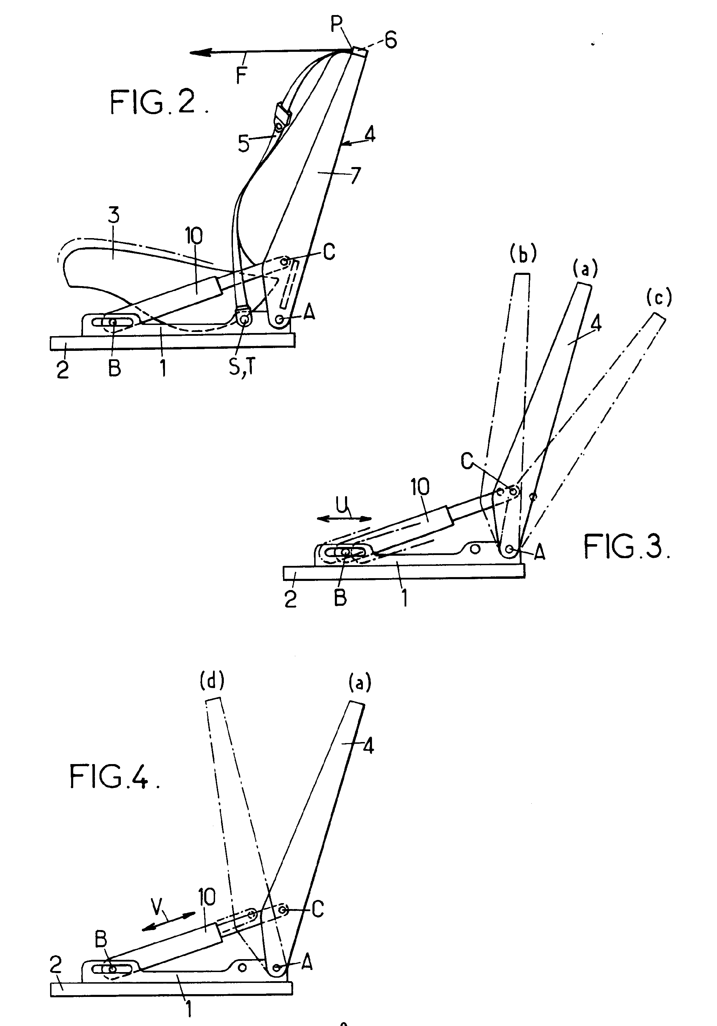

L'axe C doit être placé assez bas pour que, compte tenu de l'épaisseur du coussin de l'assise 3 (voir figure 2), la présence des jambes de force 10 n'entrave aucunement l'accessibilité latérale dudit coussin par l'usager du siège.

A cet effet, il convient que la distance entre les axes A et C ne soit qu'une petite fraction de la distance qui sépare l'axe A du point P.

Cette fraction est inférieure à 1/6 et notamment d'environ 1/7, la distance AC étant par exemple de l'ordre de 10 cm pour une distance AP de l'ordre de 70 cm.

La valeur très faible de cette fraction, qui est égale au rapport R entre les bras de levier AC et AP, se traduit par une augmentation proportionnelle de l'effort qui doit être encaissé axialement par la jambe de force 10 pour résister à l'application de la force F sur le point P.

C'est ainsi que, si ledit rapport R est égal à 7, la force à encaisser par la jambe de force 10 est égale à 7F.

De ce fait, et du fait que la valeur F est déjà très élevée en elle-même, on aurait pu penser que la construction proposée n'était guère envisageable.

La demanderesse a constaté que, d'une façon surprenante, une telle construction donnait satisfaction en raison, d'une part, de la très grande rigidité de l'ossature du dossier et, d'autre part, des très fortes contraintes axiales susceptibles d'être supportées sans dommage par les jambes de force et leurs articulations.

Ces jambes de force sont avantageusement constituées par des profilés tubulaires ou par des paires de profilés en U ouverts dans la même direction et emboîtés l'un dans l'autre.

Elles se terminent avantageusement, du côté de la poutre, par une chape coiffant jointivement cette poutre.

Les schémas des figures 3 et 4 montrent respectivement le réglage de l'inclinaison du dossier et son rabattement ou basculement vers l'avant.

Dans le premier cas, la jambe de force 10 conserve une longueur constante, la distance entre les points B et C demeurant inchangée : c'est la position du point B par rapport à l'embase 1 qui est modifiée horizontalement selon les flèches U.

On voit que ce déplacement permet de régler l'inclinaison du dossier autour de son axe A depuis une position totalement relevée b jusqu'à une position fortement inclinée c en passant par toutes les positions intermédiaires a.

Dans le second cas, le point B demeure immobile, mais la longueur de la jambe de force 10 est modifiée.

A cet effet, cette jambe 10 est avantageusement constituée par deux éléments tubulaires montés télescopiquement l'un dans l'autre et un mécanisme de verrouillage schématisé en 11 sur la figure 1, permet à volonté de solidariser entre eux ces deux éléments ou de les désolidariser.

Lorsqu'ils sont désolidarisés, ils peuvent s'enfoncer l'un dans l'autre selon les flèches V, ce qui réduit la distance entre les deux points B et C et se traduit par le basculement du dossier 4 vers l'avant depuis sa position préréglée a jusqu'à une position de basculement d.

Il est à noter que, avec cette solution, l'inclinaison préréglée du dossier 4 est automatiquement retrouvée lorsque, après son rabattement vers l'avant, ledit dossier bascule à nouveau vers l'arrière par une nouvelle extension de la jambe de force 10.

Le mécanisme de verrouillage 11 peut être commandé, d'une façon connue en soi, à partir d'une manette de commande 12 prévue sur le dossier, par l'intermédiaire d'un câble inextensible 13.

Le mécanisme 11 peut être réalisé de toute façon désirable.

Par exemple, on peut lui faire comprendre des mâchoires filetées montées sur l'un des deux éléments télescopiques et sollicitées élastiquement en permanence autour d'une tige filetée centrale liée à l'autre élément télescopique.

Il suffit alors d'exercer une traction sur le câble 13 pour écarter ces mâchoires de la tige et donc désolidariser les deux éléments alors que le lâcher du câble rétablit leur solidarisation.

Dans un tel cas, le réglage de l'inclinaison du dossier peut être obtenu par simple rotation de la tige filetée.

Ce n'est pas cette solution qui a été illustrée sur la figure 1, sur laquelle on voit une poignée de commande 14 permettant de régler la position de l'axe B dans une fente allongée longitudinale 15 de l'embase 1.

Sur ladite figure 1, on voit que deux jambes de force identiques et parallèles 10 sont montées pivotantes, respectivement, sur les portions basses de la poutre 7 et de la pièce 9 en L.

Bien que ce ne soit pas représenté, les mécanismes de réglage sont alors dédoublés sur les deux jambes de force, avec des organes de commande uniques.

Sur les figures 5 et 6, on a représenté avec plus de détails une variante du mécanisme de réglage d'inclinaison et de commande des basculements.

Dans cette variante, chaque jambe de force 10 est formée d'un seul bloc et se termine inférieurement par une double lumière allongée longitudinale 16 traversée par un tourillon 17 d'axe B.

Ce tourillon 17 est lui-même évidé par un alésage fileté s'étendant selon la direction longitudinale du siège et occupé par une tige filetée complémentaire 18 qui est raccordée à des moyens de commande angulaire 19 tels qu'un moteur électrique ou qu'un bouton ou volant de commande manuelle.

Un verrou pivotant 20 monté autour d'un axe horizontal transversal D de la jambe 10 est constamment sollicité par un ressort vers sa position, représentée sur la figure 5, pour laquelle, il maintient le tourillon 17 à une extrémité de la lumière 16, solidarisant ainsi l'axe B avec la jambe de force 10.

Dans ces conditions, il suffit de faire tourner la tige 18 pour déplacer progressivement l'axe B par rapport à l'embase 1, et donc régler l'inclinaison du dossier 4.

Pour commander les basculements de ce dossier, il suffit de tirer sur le câble 13, qui est attelé au verrou 20, de façon à écarter ce verrou du tourillon 17.

Les déplacements de la jambe de force 10 par rapport au tourillon 17 sont alors libérés, ce qui permet à l'extrémité inférieure de cette jambe de se déplacer jusqu'à sa position extrême avant pour laquelle le tourillon 17 vient en butée contre l'extrémité arrière de la double lumière 16, ainsi que bien visible sur la figure 6 : cette position correspond à l'état du dossier 4 complètement rabattu vers l'avant.

En suite de quoi et quel que soit le mode de réalisation adopté, on dispose finalement d'un siège de véhicule à ceinture embarquée dont la constitution résulte suffisamment de ce qui précède.

Ce siège présente de nombreux avantages par rapport à ceux antérieurement connus, en particulier en ce qui concerne la robustesse et la possibilité de se prêter aussi bien à des réglages d'inclinaison du dossier qu'à des basculements de celui-ci vers l'avant.

En outre la construction proposée permet de prévoir un mécanisme de rehausse de l'assise totalement indépendant de celui de réglage du dossier puisque les jambes de force sont directement interposées entre ce dossier et l'embase appelée à supporter un tel mécanisme de rehausse de l'assise.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Siège de véhicule comprenant une embase (1), un dossier (4) monté pivotant autour d'un axe horizontal transversal inférieur A lié à l'embase, et une ceinture de sécurité (5) ainsi que les points d'ancrage de cette ceinture, dont l'un P est disposé au sommet du dossier, caractérisé en ce que l'armature du dossier comprend une poutre latérale (7) très résistante à la flexion et portant le point d'ancrage supérieur P de la ceinture, une traverse inférieure (8) fixée sur la base de la poutre et suffisamment résistante pour interdire l'inclinaison transversale de cette poutre et une pièce (9) en L fixée sur la poutre et sur la traverse de façon à former avec elles un cadre, et en ce qu'il est prévu en outre une jambe de force (10) résistante au flambage dont les extrémités sont montées de façon pivotante, respectivement, autour d'un axe horizontal transversal B lié à l'avant de l'embase (1) et autour d'un axe horizontal transversal C faisant partie de la poutre (7) et disposé à une distance, de l'axe A, qui est inférieure au 1/6 de la distance séparant cet axe A du point d'ancrage supérieur P de la ceinture (5), et des moyens agissant sur la jambe de force (10) pour régler la position de l'axe C autour de l'axe A.

2. Siège de véhicule selon la revendication 1, caractérisé en ce que la poutre (7) est d'un type en caisson prismatique creux.

3. Siège de véhicule selon l'une quelconque des précédentes revendications, caractérisé en ce que la traverse (8) comprend essentiellement une tôle de forme trapézoïdale dont la grande base est soudée contre la poutre (7).

4. Siège de véhicule selon l'une quelconque des précédentes revendications, caractérisé en ce que les moyens pour régler la position de l'axe C sont agencés de façon à modifier la position longitudinale de l'axe B par rapport à l'embase (1).

5. Siège de véhicule selon la revendication 4, caractérisé en ce que les moyens de réglage fonctionnent par vissage d'une tige filetée (18) liée angulairement à un organe de commande (19) et montée sur l'embase (1) du siège dans un écrou (17) solidarisé avec l'extrémité inférieure de la jambe de force (10).

6. Siège de véhicule selon la revendication 5, caractérisé en ce que des moyens commandables à partir d'une manette (12) montée sur le dossier (4) sont prévus pour supprimer momentanément la solidarisation entre la tige filetée (18) et la jambe de force (10) pour permettre les basculements du dossier.

7. Siège de véhicule selon l'une quelconque des revendications précédentes, caractérisé en ce que les moyens pour régler la position de l'axe C sont agencés de façon à modifier la distance entre les deux axes B et C.

8. Siège de véhicule selon la revendication 7, caractérisé en ce que la jambe de force (10) présente une construction téléscopique, en ce que les deux éléments montés coulissants l'un dans l'autre constituant cette jambe sont normalement solidarisés mutuellement et en ce que des moyens commandables à partir d'une manette (12) montée sur le dossier sont prévus pour supprimer momentanément cette solidarisation.

## Patentansprüche

1. Fahrzeugsitz, der aus einem Untergestell (1), einer Rückenlehne (4), die schwenkbar um eine horizontal verlaufende untere Querachse A befestigt ist, die mit dem Untergestell verbunden ist, und einem Sicherheitsgurt (5) sowie Verankerungsstellen für den Sicherheitsgurt besteht, von denen eine p am oberen Ende der Rückenlehne angeordnet ist, dadurch gekennzeichnet, daß die Armatur der Rückenlehne aus einem seitlichen Träger (7) mit hoher Biegefestigkeit, an dem der obere Verankerungspunkt P für den Sicherheitsgurt angebracht ist, einer unteren Traverse (8), die an dem Sockel des Trägers befestigt ist und eine ausreichende Festigkeit aufweist, um eine Schrägstellung des Trägers in Querrichtung zu unterbinden und einem L-förmigen Werkstück (9) besteht, das an dem Träger und an der Traverse so befestigt ist, daß es mit diesen einen Rahmen bildet und daß darüber hinaus eine knickfeste Strebe (10), deren Enden schwenkbar um eine horizontale Querachse B , die mit dem vorderen Ende des Untergestells (1) verbunden ist und um eine horizontale Querachse C befestigt sind, die Teil des Trägers (7) und in einem Abstand von der Achse A angeordnet ist, der kleiner als 1/6 des Abstandes der Achse A von dem oberen Verankerungspunkt P des Sicherheitsgurtes (5) ist und Vorrichtungen vorgesehen sind, die auf die Strebe (10) einwirken, um die Stellung der Achse C um die Achse A zu regulieren.

2. Fahrzeugsitz nach Anspruch 1, dadurch gekennzeichnet, daß der Träger (7) ein prismatischer, kastenförmiger Hohlträger ist.

3. Fahrzeugsitz nach einem der vorhergehenden Ansprüche, dadurch gekennzeichnet, daß die Traverse (8) im wesentlichen aus einem trapezförmigen Blech besteht, dessen große Basis mit dem Träger (7) verschweißt ist.

4. Fahrzeugsitz nach einem der vorhergehenden Ansprüche, dadurch gekennzeichnet, daß die Einrichtungen zum Regulieren der Stellung der Achse C so ausgebildet sind, daß die Stellung der Achse B in Längsrichtung in bezug auf das Gestell (1) veränderbar ist.

5. Fahrzeugsitz nach Anspruch 4, dadurch gekennzeichnet, daß die Reguliereinrichtungen durch Verschrauben einer Gewindestange (18), die winklig mit einem Betätigungsorgan (19) verbunden und an dem Gestell (1) des Sitzes befestigt ist, in einer Mutter (17) betrieben werden, die mit dem unteren Ende der Strebe (10) verbunden ist.

6. Fahrzeugsitz nach Anspruch 5, dadurch gekennzeichnet, daß von einem an der Rückenlehne (4) befestigten Handgriff (12) aus steuerbare Einrichtungen vorgesehen sind, mit denen die Verbindung zwischen der Gewindestange (18) und der Strebe (10) vorübergehend aufhebbar ist, um die Klappbewegungen der Rückenlehne zu ermöglichen.

7. Fahrzeugsitz nach einem der vorhergehenden Ansprüche, dadurch gekennzeichnet, daß die Einrichtungen zum Regulieren der Stellung der Achse C so ausgebildet sind, daß die Entfernung zwischen den beiden Achsen B und C veränderbar ist.

8. Fahrzeugsitz nach Anspruch 7, dadurch gekennzeichnet, daß die Strebe (10) als Teleskop ausgebildet ist, daß die beiden gleitend ineinander befestigten Teile, die die Strebe bilden, normalerweise aneinander befestigt sind und daß von einem an der Rückenlehne befestigten Handgriff (12) aus steuerbare Einrichtungen vorgesehen sind, um die Befestigung vorübergehend aufzuheben.

## Claims

1. Vehicle seat comprising a base (1), a seat-back (4) mounted for pivoting about a lower transverse horizontal axis A linked to the base of the seat and a safety belt (5) as well as the points for anchoring this belt, one P of which is disposed at the top of the seat-back, characterized in that the framework of the seat-back comprises a lateral beam (7) which is very flexion resistant and carries the upper anchorage point P of the belt, a lower cross-piece (8) fixed to the base of the beam and sufficiently resistant to prevent the transverse inclination of this beam and an L shaped piece (9) fixed on the beam and on the cross-piece so as to form a frame therewith, and in that a buckling resistant strut (10) is further provided whose ends are mounted for pivoting, respectively, about a transverse horizontal axis B linked to the front of the base (1) and about a transverse horizontal axis C forming part of the beam (7) and disposed at a distance, from axis A, which is less than 1/6 of the distance separating this axis A from the upper anchorage point P of the safety belt (5), and means acting on the strut (10) for adjusting the position of axis C about axis A.

2. Vehicle seat according to claim 1, characterized in that the beam (7) is of a hollow prismatic box type.

3. Vehicle seat according to any one of the preceding claims, characterized in that the cross-piece (8) comprises essentially a metal sheet of trapezoidal shape whose large base is welded against the beam (7).

4. Vehicle seat according to any one of the preceding claims, characterized in that the means for adjusting the position of axis C are arranged so as to modify the longitudinal position of the axis B with respect to the base (1).

5. Vehicle seat according to claim 4, characterized in that the adjustment means operate by screwing a threaded rod (18) connected angularly to a control member (19) and mounted on the base (1) of the seat, in a nut (17) fast with the lower end of the strut (10).

6. Vehicle seat according to claim 5, characterized in that means controllable from a handle (12) mounted on the seat-back (4) are provided for momentarily suppressing the interconnection between the threaded rod (18) and the strut (10) for tipping the seat-back.

7. Vehicle seat according to any one of the preceding claims, characterized in that the means for adjusting the position of axis C are arranged so as to modify the distance between the two axes B and C.

8. Vehicle seat according to claim 7, characterized in that the strut (10) has a telescopic construction, in that the two elements mounted slidingly one in the other forming this strut are normally interlocked mutually and in that means controllable from a handle (12) mounted on the seat-back are provided for momentarily suppressing such interlocking.
